# EUROPÄISCHE PATENTSCHRIFT

(11) **EP 3 628 715 B1**
(45) Veröffentlichungstag und Bekanntmachung des Hinweises auf die Patenterteilung: **10.07.2024**
(21) Anmeldenummer: 19192653.4
(22) Anmeldetag: 20.08.2019
(51) Int. Cl.: C09J 7/20, C09J 7/30, C09J 105/16, C09J 11/04, C09J 11/08, H02G 3/32

(54) **TECHNISCHES KLEBEBAND INSBESONDERE KABELWICKELBAND**
TECHNICAL ADHESIVE TAPE, ESPECIALLY TAPE FOR BUNDLING CABLES
RUBAN ADHÉSIF TECHNIQUE, EN PARTICULIER BANDE D'ENROULEMENT DE CÂBLE

(30) Priorität: 28.09.2018 DE 202018105611 U
(43) Veröffentlichungstag der Anmeldung: 01.04.2020
(73) Patentinhaber: Certoplast Technische Klebebänder GmbH, 42285 Wuppertal (DE)
(72) Erfinder: Leermann, Timo, 42369 Wuppertal (DE); Rambusch, René, 42113 Wuppertal (DE)
(74) Vertreter: Andrejewski - Honke Patent- und Rechtsanwälte Partnerschaft mbB

(56) Entgegenhaltungen:
- WO-A1-2004/039683
- WO-A1-2016/078888
- WO-A1-2017/106123
- WO-A1-2018/046315
- WO-A2-2011/062648

## Beschreibung

Die Erfindung betrifft die Verwendung eines technischen Klebebandes und insbesondere eines druckempfindlichen technischen Klebebandes als Kabelwickelband zum Umhüllen von Kabeln in Automobilen, mit einem bandförmigen Träger, und mit einer Kleberbeschichtung aus Klebstoff auf zumindest einer Seite des Trägers.

Technische Klebebänder werden typischerweise im Baubereich eingesetzt. Zu nennen sind hier beispielsweise Isolierbänder, Korrosionsschutzbandagen, Aluminiumklebebänder, Folienklebebänder usw. Daneben können solche technischen Klebebänder als Schutzüberzug oder Schutzfilm eingesetzt werden, um empfindliche Oberflächen beim Transport vor Kratzern zu schützen, Korrosionen an beispielsweise Metallbandoberflächen zu vermeiden etc. Ein Beispiel für ein solches technisches Klebeband wird in der DE 103 59 630 A1 beschrieben.

Da solche technischen Klebebänder typischerweise auf rauen, und teils staubigen, leicht feuchten oder kalten Untergründen haften müssen, wird meistens mit Klebstoffen gearbeitet, die über eine hohe Haftklebrigkeit verfügen und zusätzlich druckempfindlich gestaltet sind im Gegensatz zu beispielsweise Klebebändern, die im Medizinsektor eingesetzt werden. An dieser Stelle kommt es gerade nicht auf eine hohe Haftfähigkeit an und spielen ganz andere Anforderungen wie beispielsweise die Hautverträglichkeit eine Rolle. Ganz besonders bevorzugt betrifft die Erfindung spezielle technische Klebebänder, nämlich Kabelwickelbänder.

Kabelwickelbänder wie sie beispielsweise durch die gattungsbildende DE 20 2012 103 754 U1 bekannt geworden sind, werden im Allgemeinen dazu genutzt, mehrere Kabel in Automobilen durch eine Umwicklung bzw. Umhüllung zusammenzufassen. Dazu wird das fragliche Kabelwickelband meistens wendelförmig um die zusammenzufassenden Kabel herumgewickelt. Es ist aber auch eine gleichsam schlauchförmige Umwicklung in Längsrichtung der Kabel möglich und im Rahmen der Erfindung ausdrücklich beabsichtigt.

Aufgrund des beschriebenen Verwendungszweckes kommt es bei solchen Kabelwickelbändern zum Umhüllen von Kabeln in Automobilen einerseits darauf an, dass die fraglichen Kabelwickelbänder beständig gegenüber erhöhten Temperaturen, Öl, Benzin etc. sind, weil die fraglichen Kabel oftmals im Motorraum verlegt werden. Darüber hinaus und andererseits werden zur Verarbeitung solcher Kabelwickelbänder meistens geringe Reißkräfte in Querrichtung gefordert, um eine Handeinreißbarkeit in besagter Querrichtung ohne zusätzliche Werkzeuge wie beispielsweise Messer, Scheren etc. zu realisieren.

Bei Kabeln in Automobilen oder allgemein Kraftfahrzeugteilen in Automobilen aus Gummi oder Kunststoff besteht ebenso wie bei den die Kabel umhüllenden Kabelwickelbändern das grundsätzliche Problem, dass an dieser Stelle oftmals unangenehme Gerüche durch Ausdünstungen beobachtet und von Benutzern als störend empfunden werden. Diese Ausdünstungen werden oftmals auf in diesem Zusammenhang bei der Verarbeitung eingesetzte Lösungsmittel zurückgeführt. Aus diesem Grund wird in der Praxis verstärkt verlangt, dass die eingesetzten Produkte keine Lösungsmittel enthalten, die dem Fachmann als VOC - volatile organic compounds - bekannt sind. Aus diesem Grund werden beispielsweise Kleberbeschichtungen mit wasserbasierten Klebstoffen eingesetzt, die jedoch im Vergleich zu lösungsmittelbasierten Klebstoffsystemen eine verringerte Klebkraft besitzen.

Im Rahmen der WO 2017/106123 A1 wird ein Klebeband beschrieben, welches mit geruchsbindenden Partikeln ausgerüstet ist. Diese finden sich primär in der Trägerschicht. Auf diese Weise sollen insbesondere VOCs (volatile organic compounds) absorbiert werden.

Bei der WO 2011/062648 A2 geht es unter anderem um ein Klebeband, welches mit deodorisierenden Partikeln ausgerüstet ist. Als geeignete Partikel werden unter anderem Natriumbikarbonate, Kaliumbikarbonate, Cyclodextrin, Zeolithe sowie Kombinationen angesprochen.

Ferner wird beispielhaft im Stand der Technik nach der DE 10 2008 038 421 A1 auf eine besonders geprägte PVC-Folie als Trägermaterial zurückgegriffen. Das setzt eine spezielle Vorgehensweise mit einer geringen Prägungstiefe im Mikrometerbereich voraus. Außerdem werden der PVC-Folie Zusätze beigemischt. Als Folge hiervon ist die Herstellung relativ aufwendig. Außerdem hat sich herausgestellt, dass der Verzicht auf Lösungsmittel das Problem der Geruchsentstehung in der Praxis nicht, jedenfalls nicht vollständig, lösen kann. Hier will die Erfindung insgesamt Abhilfe schaffen.

Der Erfindung liegt das technische Problem zugrunde, eine derartige Verwendung eines technischen Klebebandes als Kabelwickelband zum Umwickeln von Kabeln in Automobilen so weiter zu entwickeln, dass auf einfache Art und Weise störende Gerüche unterdrückt oder doch zumindest weitgehend abgeschwächt werden.

Zur Lösung dieser technischen Problemstellung ist die Verwendung nach Anspruch 1 vorgesehen.

Bei den an dieser Stelle geeigneten Geruchsreguliermitteln kann es sich beispielhaft und nicht einschränkend um regelmäßig pulverförmige oder in Granulatform vorliegende anorganische Absorptionsmittel und hier Mineralien wie beispielsweise Tone oder allgemein Silikate handeln. Speziell empfiehlt sich der Einsatz von Zeolithen, also Gerüstsilikaten, die offene Hohlräume in Form von Kanälen und Käfigen zur Anlagerung von Molekülen zur Verfügung stellen. Daneben können aber auch andere Absorptionsmittel wie beispielsweise Aktivkohle eingesetzt werden.

Ferner hat sich der Rückgriff auf organische Absorptionsmittel wie beispielsweise Cyclodextrin als günstig erwiesen. Bei Cyclodextrinen handelt es sich um eine Klasse von Verbindungen, die zu den zyklischen Polysachariden gehören. Sie stellen ringförmige Abbauprodukte von Stärke mit einer toroidalen Struktur sowie einem zentralen Hohlraum zur Verfügung, welcher erneut für die Anlagerung von Molekülen bzw. Geruchsmolekülen dient und eingesetzt werden kann. Aufgrund ihrer teilweisen Verwendung in der Lebensmittelindustrie sind Cyclodextrine bzw. Cyclodetrin-Derivate insgesamt unbedenklich und können aus den geschilderten Gründen beispielsweise Schweißgeruch binden.

Das heißt, als Geruchsreguliermittel greift die Erfindung auf pulverförmige und/oder granulare Absorptionsmittel zurück, die sich besonders einfach verarbeiten lassen. Dazu wird das betreffende Pulver bzw. werden die Granularien einem Grundwerkstoff bei der Herstellung des Klebstoffes zugemischt. Hinzu kommt, dass die beschriebenen Absorptionsmittel gesundheitlich unbedenklich sind, also problemlos für die manuelle Verarbeitung als Kabelwickelband zum Umhüllen von Kabeln in Automobilen eingesetzt werden können. Durch den Rückgriff auf sowohl organische Absorptionsmittel als auch anorganische mineralische Absorptionsmittel steht ein großes Spektrum an geeigneten Materialien zur Verfügung, die aufgrund ihrer anderweitigen Verbreitung zu einem günstigen Preis angeboten und verarbeitet werden können. Dabei versteht es sich selbstverständlich, dass die zuvor beispielhaft genannten Geruchsreguliermittel sowohl einzeln als auch in Kombination eingesetzt werden können.

Insgesamt und überraschenderweise hat sich im Rahmen der vorliegenden Erfindung gezeigt, dass die fraglichen Geruchsreguliermittel nicht nur in der Lage sind, menschliche Gerüche aufnehmen zu können.

Sondern die Geruchsreguliermittel sind prinzipiell auch dazu geeignet und können eingesetzt werden, um beispielsweise Ausdünstungen aufgrund von eingesetzten Lösungsmitteln bei der Herstellung von Kunststoffen ebenso wie anderweitige, bisher nicht beherrschbare Gerüche bei der Verarbeitung von Kabelwickelbändern und der Ausrüstung von Kabeln in Automobilen absorbieren zu können. Zugleich lassen sich die betreffenden pulverförmigen granularen Absorptionsmittel einfach in den Klebstoff zur Realisierung der Kleberbeschichtung im Zusammenhang mit der Herstellung des Kabelwickelbandes einbringen, und zwar ohne dass hierdurch die geforderten Eigenschaften solcher Kabelwickelbänder im Hinblick auf Medien- und Temperaturbeständigkeit oder deren Handeinreißbarkeit leiden. Auch die Klebeeigenschaften des Klebstoffes werden nicht negativ beeinflusst. Das war in dieser Konsequenz bisher nicht zu erwarten und ist überraschend.

Erfindungsgemäß wird ein maximaler Anteil der Grammatur für das Geruchsreguliermittel von 10 Gew.-% bezogen auf die Gesamtmasse vorgegeben. Durch diese Höchstgrenze ist sichergestellt, dass die Eigenschaften des Klebstoffes nicht signifikant gegenüber einem Klebstoff ohne eingebrachtes Geruchsreguliermittel verändert werden.

Darüber hinaus empfiehlt die Erfindung, das Geruchsreguliermittel in einer Grammatur von mindestens 0,1 Gew.-% und vorzugsweise von mindestens 0,2 Gew.-%, bezogen auf die Gesamtmasse des Klebstoffes einzusetzen. Eine solche Mindestmenge ist erforderlich, um die typischerweise bei der Verarbeitung des Kabelwickelbandes entstehenden Gerüche oder anderweitige Gerüche im Umfeld wirksam absorbieren bzw. adsorbieren zu können. Besonders bevorzugt hat sich ein Grammaturbereich des Geruchsreguliermittels von 0,1 Gew.-% bis 8 Gew.-% und vorzugsweise 0,2 Gew.-% bis 6 Gew.-%, jeweils bezogen auf die Gesamtmasse des Klebstoffes bzw. des Trägers, als günstig erwiesen.

Das Geruchsreguliermittel kann nicht nur in pulverförmiger Form bzw. als Granulat verarbeitet werden. Sondern im Rahmen der Erfindung ist es auch möglich, das Geruchsreguliermittel nicht nur in reiner, sondern auch in gelöster, dispergierter und/oder mikroverkapselter Form in den Klebstoff für die Kleberbeschichtung und/oder den Träger einzubringen. Das heißt, die vorgenannten Darreichungsformen des Geruchsreguliermittels sind sowohl als Alternativen als auch in Kombination zu berücksichtigen. Beispielsweise mag es sich bei dem Geruchsreguliermittel um ein Pulver handeln, welches in eine Klebstoffzubereitung eingearbeitet wird. Als Klebstoff kann beispielsweise eine Dispersion zum Einsatz kommen, die erfindungsgemäß mit dem Geruchsreguliermitteln in Pulverform zusätzlich ausgerüstet wird. Die solchermaßen erhaltene Klebstoffzubereitung lässt sich dann wie die ursprüngliche Dispersion auf den fraglichen Träger beispielsweise aufsprühen, aufrakeln oder auch auf andere Art und Weise aufbringen. Bei der betreffenden Dispersion kann es sich um eine solche auf beispielsweise Acrylatbasis handeln.

Vergleichbar wird für den Fall vorgegangen, dass als Klebstoff ein Schmelzklebstoff zum Einsatz kommt. Dieser Schmelzklebstoff mag auf Acrylat- oder Kautschukbasis hergestellt werden. Auch in diesem Fall kann das Geruchsreguliermittel einfach und kostengünstig als Pulver in den fraglichen Schmelzklebstoff eingebracht und zusammen mit diesem über beispielsweise eine Spritzdüse auf den bandförmigen Träger aufgebracht werden. Grundsätzlich können als Klebstoffe alternativ und zusätzlich auch solche auf Silikon-, Polyurethan-, Polyether- und Polyolefinbasis eingesetzt werden. In jedem Fall ist die Verarbeitung und Ausrüstung einer geeigneten Klebstoffzubereitung zur Herstellung der Kleberbeschichtung erfindungsgemäß besonders einfach und kostengünstig zu realisieren, wenn das Geruchsreguliermittel im Beispielfall als Pulver der fraglichen Klebstoffzubereitung zugeführt und in die Klebstoffzubereitung eingearbeitet wird.

Vergleichbares gilt für den Fall, dass das Geruchsreguliermittel in mikroverkapselter Form in die Klebstoffzubereitung eingearbeitet wird. Auch in diesem Fall kann die Verarbeitung der Klebstoffzubereitung als Dispersion oder Schmelzklebstoff in vergleichbarem Sinne wie zuvor beschrieben vorgenommen und durchgeführt werden. In beiden Fällen ändert sich an der Herstellung der Kleberbeschichtung durch den Zusatz des Geruchsreguliermittels praktisch nichts, weshalb mit geringen Herstellungskosten zu rechnen ist. Diese lassen sich im Kern auf den ergänzenden Materialeinsatz für das Geruchsreguliermittel reduzieren.

Alternativ oder zusätzlich kann das Geruchsreguliermittel aber auch in eine Trägerzubereitung eingearbeitet werden. Das gilt sowohl für den Fall, dass das Geruchsreguliermittel als Pulver oder als Granulat zur Verfügung steht, ebenso wie dann, wenn es sich bei dem Geruchsreguliermittel um Mikrokapseln handelt. Schließlich kann das Geruchsreguliermittel in die Trägerzubereitung auch als wässrige oder sonstige Lösung problemlos eingearbeitet werden. Denn bei dem Träger handelt es sich vorteilhaft um ein textiles Flächengebilde aus Faserstoffen und/oder Filamentstoffen.

Als Faserstoffe bzw. Filamentstoffe für den Träger kommen typischerweise Kunststoffe wie Polyester, Polyamid, Polyethylen, Polypropylen, Polyurethan, Polyacetat oder auch Naturstoffe wie Baumwolle oder Viskose sowie Mischungen zum Einsatz. Die fraglichen Faserstoffe und die daraus hergestellten Kunststofffasern oder Baumwoll- bzw. Viskosefasern können problemlos hinsichtlich ihrer Trägerzubereitung mit dem Geruchsreguliermittel ausgerüstet werden. Dazu wird das fragliche Geruchsreguliermittel beispielsweise als Pulver, als Granulat oder auch in mikroverkapselter Form oder auch als Lösung beispielsweise einem Kunststoffgranulat zugegeben, welches dann seinerseits zur Herstellung der gewünschten Fasern genutzt wird. Das kann durch eine bekannte Spinndüsenherstellung erfolgen.

Anstelle eines zuvor bereits beschriebenen und als textiles Flächengebilde ausgebildeten Trägers ist es aber auch möglich, mit einem als Folie ausgebildeten Träger zu arbeiten. Ein solcher Träger bzw. Folienträger kann dabei beispielhaft aus Kunststoffen wie PVC (Polyvinylchlorid), Polyethylen (PE), Polypropylen (PP) usw. hergestellt werden. Auch in diesem Fall lässt sich das Geruchsreguliermittel beispielhaft in pulverförmiger Form oder auch als Dispersion in das Granulat für die Herstellung der Folie einbringen und einarbeiten, ähnlich wie dies zuvor bereits im Zusammenhang mit der Herstellung der Faserstoffe bzw. Filamentstoffe für den Träger beschrieben worden ist. Grundsätzlich kann der Träger auch als Laminat aus beispielsweise einer Folie mit einem textilen Träger ausgebildet sein.

Als denkbare Klebstoffe für das erfindungsgemäße Kabelwickelband haben sich solche auf Acrylatbasis als besonders günstig erwiesen. Diese können beispielsweise in Gestalt von Dispersionen aufgebracht werden. Es sind aber auch Schmelzklebstoffe auf Acrylat- und/oder Kautschukbasis ebenso wie Mischungen denkbar.

In sämtlichen Fällen lässt sich das fragliche Geruchsreguliermittel besonders einfach in die Klebstoffzubereitung bzw. den Klebstoff zur Herstellung der Kleberbeschichtung ebenso wie in die Trägerzubereitung einarbeiten. Das gilt besonders vorteilhaft für den Fall, dass das fragliche Geruchsreguliermittel als Pulver vorliegt und in diesem Fall beispielsweise in ein Granulat zur Herstellung des Klebstoffes und/oder der Fasern des Trägers und/oder das Granulat zur Herstellung der Folie eingebracht wird.

Insgesamt trägt die Erfindung der Tatsache Rechnung, dass bereits geringe gewichtsmäßige Konzentrationen des Geruchsreguliermittels in der Kleberbeschichtung respektive im Träger ausreichen, um die gewünschte geruchsbindende Wirkung zu erzeugen, und zwar unabhängig davon, ob etwaige schädliche Gerüche vom Kabelwickelband, von den umhüllten Kabeln oder von anderen im Umfeld befindlichen Materialien erzeugt werden. Durch den geringen Anteil des Geruchsreguliermittels in der Kleberbeschichtung bzw. dem Träger unter Berücksichtigung einer maximalen Grammatur von 20 Gew.- % und insbesondere von 10 Gew.-% ist damit zu rechnen, dass die Verarbeitung der Kleberzubereitung respektive der Trägerzubereitung gegenüber einer Vorgehensweise ohne den Zusatz des Geruchsreguliermittels praktisch nicht beeinflusst wird. Das gilt insbesondere dann, wenn im Maximum 10 Gew.-% des Geruchsreguliermittels für das gesamte Kabelwickelband als Obergrenze eingehalten werden. Diese 10 Gew.-% können sich beispielsweise komplett auf den Klebstoff oder den Träger oder auch hälftig auf den Klebstoff und den Träger sowie in beliebigen Kombinationen verteilen. Jedenfalls wird die Herstellung des Kabelwickelbandes unter Berücksichtigung dieser Vorgaben insgesamt nicht negativ beeinflusst.

Vergleichbares gilt für die Klebeeigenschaften der Kleberbeschichtung und auch die Eigenschaften des Trägers hinsichtlich beispielsweise seiner Reißfestigkeit in Längsrichtung, seiner Handeinreißbarkeit etc. Das heißt, solange das fragliche Geruchsreguliermittel im angegeben Grammaturbereich mit einem Maximalanteil von 10 Gew.-% im fraglichen Kabelwickelband vorhanden ist, werden ansonsten die mechanischen Eigenschaften des betreffenden Kabelwickelbandes nicht oder praktisch nicht negativ beeinflusst. Das gilt auch dann, wenn das Kabelwickelband ergänzend beispielsweise eingefärbt wird. In diesem Fall lassen sich die fraglichen Farbstoffpartikel ebenso wie die Partikel des Geruchsreguliermittels gemeinsam in das zu verarbeitende Kunststoffgranulat als Klebstoffzubereitung respektive Trägerzubereitung einarbeiten.

Das auf diese Weise hergestellte Kabelwickelband verfügt hinsichtlich seines bandförmigen Trägers typischerweise über ein Flächengewicht im Bereich von 20 g/m² bis 500 g/m². Insbesondere wird ein Flächengewicht des bandförmigen Trägers im Bereich von 50 g/m² bis 200 g/m² beobachtet. Die Stärke des Trägers ist dabei meistens unterhalb von 0,8 mm angesiedelt. Bevorzugt werden Materialstärken des Trägers im Bereich von weniger als 0,5 mm realisiert, um in der Regel die gewünschte Handeinreißbarkeit zur Verfügung zu stellen.

Die Kleberbeschichtung liegt im Allgemeinen mit einem Auftragsgewicht im Bereich zwischen 20 g/m² bis 200 g/m² und insbesondere im Bereich von 50 g/m² bis 150 g/m² vor. Als geeignete Kleber kommen nicht einschränkend Synthesekautschukkleber, Kleber auf Hotmeltbasis oder solche auf Acrylatbasis (mit oder ohne Lösemittel) zum Einsatz. Ebenso umfasst die Erfindung Klebstoffe auf Silikon-, Polyurethan-, Polyether- und Polyolefinbasis. Außerdem können die fraglichen Klebstoffe nach der Beschichtung bei Bedarf vernetzt werden, beispielsweise strahlenvernetzt. Darüber hinaus sind Klebstoffe in Pulverform, Dispersionsklebstoffe etc. denkbar. Zur Aufbringung des Klebers bzw. der Kleberbeschichtung lassen sich Methoden wie beispielsweise eine Direktbeschichtung oder auch eine Transferbeschichtung oder auch eine kontaktlose Beschichtung nach der "curtain coating"-Methode einsetzen und vorteilhaft berücksichtigen.

## Patentansprüche

1. Verwendung eines technischen Klebebandes, als Kabelwickelband zum Umwickeln von Kabeln in Automobilen, wobei
das Kabelwickelband mit einem bandförmigen Träger, und mit einer Kleberbeschichtung aus Klebstoff auf zumindest einer Seite des Trägers ausgerüstet ist, wobei ferner
die Kleberbeschichtung mit einem eingebrachten Geruchsreguliermittel zur Unterdrückung oder doch zumindest weitgehenden Abschwächung störender Gerüche ausgerüstet ist, wobei weiter
das Geruchsreguliermittel als Pulver, Granulat oder in mikroverkapselter Form in eine Klebstoffzubereitung eingearbeitet wird, und wobei
das Geruchsreguliermittel im Klebstoff in einer Grammatur von minimal 0,1 Gew.-% und maximal 10 Gew.-%, bezogen auf die Gesamtmasse des betreffenden Klebstoffes, vorliegt und aus der Gruppe ausgewählt ist, welche aus Aktivkohle, Zeolith, Cyclodextrin sowie Kombinationen besteht.

2. Verwendung nach Anspruch 1, **dadurch gekennzeichnet, dass** das Geruchsreguliermittel im Klebstoff in einer Grammatur von minimal 0,2 Gew.-%, bezogen auf die Gesamtmasse des Klebstoffes, vorliegt.

3. Verwendung nach Anspruch 1 oder 2, **dadurch gekennzeichnet, dass** das Geruchsreguliermittel in einer Grammatur von 0,2 Gew.-% bis 6 Gew.-%, bezogen auf die Gesamtmasse im Klebstoff, vorliegt.

4. Verwendung nach einem der Ansprüche 1 bis 3, **dadurch gekennzeichnet, dass** das Geruchsreguliermittel in reiner, gelöster, dispergierter und/oder mikroverkapselter Form in der Kleberbeschichtung und/oder dem Träger vorhanden ist.

5. Verwendung nach einem der Ansprüche 1 bis 4, **dadurch gekennzeichnet, dass** der Träger als textiles Flächengebilde aus Faserstoffen und/oder Filamentstoffen ausgebildet ist.

6. Verwendung nach Anspruch 5, **dadurch gekennzeichnet, dass** als Faserstoffe bzw. Filamentstoffe für den Träger Kunststoffe wie beispielsweise Polyester, Polyamid, Polyethylen, Polypropylen, Polyurethan, Polyacetat oder Naturstoffe wie Baumwolle oder Viskose sowie Mischungen eingesetzt werden.

7. Verwendung nach einem der Ansprüche 1 bis 6, **dadurch gekennzeichnet, dass** der Träger als Folie, insbesondere Kunststofffolie auf Basis von beispielsweise PVC, PE, PP ausgebildet ist.

8. Verwendung nach einem der Ansprüche 1 bis 7, **dadurch gekennzeichnet, dass** als Klebstoffe solche auf Silikon-, Polyurethan-, Polyether- und Polyolefinbasis und/oder Schmelzklebstoffe auf Kautschukbasis und/oder Acrylatbasis und/oder Dispersionsklebstoffe eingesetzt werden.

## Claims

1. Use of a technical adhesive tape as a cable wrapping tape for wrapping cables in automobiles, wherein
the cable wrapping tape is furnished with a strip-like carrier and with an adhesive coating of adhesive on at least one side of the carrier, wherein further
the adhesive coating is furnished with an applied odour control agent for suppressing or at least largely diminishing objectionable odours, wherein further
the odour control agent is incorporated in an adhesive preparation as a powder, granulate or in microencapsulated form, and wherein
the odour control agent is present in the adhesive in a grammage of at least 0.1 % by weight and not more than 10 % by weight relative to the total mass of the adhesive in question and is selected from the group consisting of activated carbon, zeolite, cyclodextrin and combinations thereof.

2. Use according to Claim 1, **characterized in that** the odour control agent is present in the adhesive in a grammage of at least 0.2 % by weight relative to the total mass of the adhesive.

3. Use according to Claim 1 or 2, **characterized in that** the odour control agent is present in the adhesive in a grammage from 0.2% by weight to 6 % by weight relative to the total mass of the adhesive.

4. Use according to any one of Claims 1 to 3, **characterized in that** the odour control agent is present in pure, dissolved, dispersed and/or microencapsulated form in the adhesive coating and/or the carrier.

5. Use according to any one of Claims 1 to 4, **characterized in that** the carrier is embodied as a textile fabric of fibrous materials and/or filamentous substances.

6. Use according to Claim 5, **characterized in that** plastics such as polyester, polyamide, polyethylene, polypropylene, polyurethane, polyacetate or natural substances such as cotton or viscose and mixtures thereof are used as fibrous materials or filamentous substances for the carrier.

7. Use according to any one of Claims 1 to 6, **characterized in that** the carrier is embodied as a film, in particular a plastic film based on, for example, PVC, PE, PP.

8. Use according to any one of Claims 1 to 7, **characterized in that** the adhesives used are those based on silicone, polyurethane, polyether, and polyolefin, and/or hotmelt adhesives based on rubber and/or acrylate, and/or dispersion adhesives.

## Revendications

1. Utilisation d'une bande adhésive technique sous la forme d'une bande d'enroulement de câbles pour enrouler des câbles dans le secteur automobile, sachant que
la bande d'enroulement de câbles est dotée d'un support en forme de bande et avec un revêtement adhésif composé d'une matière adhésive sur au moins un côté du support, sachant en plus que
le revêtement adhésif est doté d'un agent anti-odeur incorporé pour supprimer ou affaiblir au moins dans une large mesure les odeurs gênantes, sachant en plus que
l'agent anti-odeur est incorporé dans une préparation adhésive sous la forme de poudre, de granulat ou sous une forme microcapsulaire et sachant que
l'agent anti-odeur est présent dans la matière adhésive dans un grammage minimum de 0,1 %/poids et maximum de 10 %/poids en se référant à la masse totale de la matière adhésive concernée et est sélectionné à partir du groupe qui est composé de charbons actifs, de zéolithe, de cyclodextrine ainsi que de combinaisons.

2. Utilisation selon la revendication 1, **caractérisée en ce que** l'agent anti-odeur est présent dans la matière adhésive dans un grammage minimum de 0,2 %/poids en se référant à la masse totale de la substance adhésive.

3. Utilisation selon la revendication 1 ou 2, **caractérisée en ce que** l'agent anti-odeur est présent dans un grammage de 0,2 %/poids à 6 %/poids en se référant à la masse totale de la matière adhésive.

4. Utilisation selon l'une quelconque des revendications 1 à 3, **caractérisée en ce que** l'agent anti-odeur est présent dans le revêtement adhésif et/ou dans le support sous une forme pure, dissoute, dispersée et/ou microcapsulaire.

5. Utilisation selon l'une quelconque des revendications 1 à 4, **caractérisée en ce que** le support est constitué sous une forme de structure de surface textile composée de substances fibreuses et/ou filamenteuses.

6. Utilisation selon la revendication 5, **caractérisée en ce que** comme substances fibreuses ou filamenteuses sont utilisées pour le support des matières plastiques comme par exemple le polyester, le polyamide, le polyéthylène, le polypropylène, le polyuréthane, le polyacétate ou des substances naturelles comme le coton ou la viscose ainsi que des mélanges.

7. Utilisation selon l'une quelconque des revendications 1 à 6, **caractérisée en ce que** le support est constitué sous la forme d'une feuille, en particulier d'une feuille de matière plastique à base, par exemple, de polychlorure de vinyle (PCV), de polyéthylène (PE), de polypropylène (PP).

8. Utilisation selon l'une quelconque des revendications 1 à 7, **caractérisée en ce que** sont utilisées comme matières adhésives des matières telles que celles à base de silicone, de polyuréthane, de polyéther et de polyoléfine et/ou des adhésifs thermofusibles à base de caoutchouc et/ou à base d'acrylate et/ou des adhésifs à dispersion.
